# Europäisches Patentamt
## European Patent Office.
## Office européen des brevets

(19)

(11) Veröffentlichungsnummer: **0 004 304**
A1

(12) # EUROPÄISCHE PATENTANMELDUNG

(21) Anmeldenummer: 79100634.9

(22) Anmeldetag: 05.03.79

(51) Int. Cl.²: **C 02 C 1/14,** C 02 C 1/17

(30) Priorität: 17.03.78 DE 2811719

(43) Veröffentlichungstag der Anmeldung: 03.10.79 Patentblatt 79/20

(84) Benannte Vertragsstaaten: **BE DE FR GB IT NL**

(71) Anmelder: Bayer Aktiengesellschaft, Zentralbereich Patente,Marken und Lizenzen Bayerwerk, D-5090 Leverkusen 1 (DE)

(72) Erfinder: Baumgarten, Jörg, Dr., In der Beek 88, D-5600 Wuppertal 1 (DE)
Erfinder: Rudolph, Jörg, Carl-Duisberg-Strasse 310, D-5090 Leverkusen 1 (DE)
Erfinder: Frommer, Werner, Prof. Dr., Claudiusweg 14, D-5600 Wuppertal 1 (DE)
Erfinder: Mack, Kurt, Dr., Claudiusweg 15, D-5600 Wuppertal 1 (DE)
Erfinder: Mann, Theo, Dr., Blumenstrasse 18, D-4018 Langenfeld (DE)
Erfinder: Benda, Herbert, Dr., Blaugasse 4, D-5000 Köln 40 (DE)
Erfinder: Malcharek, Franz, Dr., Carl-Duisberg-Strasse 316, D-5090 Leverkusen (DE)

(54) **Reduktive Behandlung chemischer Stoffe, insbesondere Abwasserinhaltstoffe, mit Hilfe von Mikroorganismen mit Atmung oder daraus hergestellten Präparationen.**

(57) Die vorliegende Erfindung betrifft ein Verfahren zur biochemischen Reduktion organischer Stoffe oder organisch/anorganischer Stoffgemische mittels Mikroorganismen bei Abwesenheit von freiem molekularem Sauerstoff in Gegenwart von Wasser und biologischen Elektronenlieferanten, die Verwendung solcher Mikroorganismen mit Atmung, insbesondere für die reduktive Behandlung von Abwasserinhaltstoffen sowie Mischungen, die Mikroorganismen mit Atmung in konservierter Form oder als Präparationen enthalten.

EP 0 004 304 A1

BAYER AKTIENGESELLSCHAFT          5090 Leverkusen, Bayerwerk
Zentralbereich                    Je- mo
Patente, Marken und Lizenzen

Reduktive Behandlung chemischer Stoffe, insbesondere Abwasserinhaltstoffe, mit Hilfe von Mikroorganismen mit Atmung oder daraus hergestellten Präparationen.

Die Behandlung von Abwässern mit anaeroben, reduktiven Mikroorganismen in Faulbehältern zur Methangewinnung ist bekannt, beispielsweise aus: Reinhold Köhler "Anaerober Abbau von Hefefabrikabwasser", Wasser, Luft und Betrieb 17 (1973), Nr. 10, Seiten 342 bis 346 . Die hierbei verwendeten anaeroben reduktiven Mikroorganismen, beispielsweise Methanbakterien, reagieren jedoch sehr empfindlich, z.B. auf hohe Salzkonzentrationen, auf Schwermetalle, auf Tenside und Emulgatoren oder auf organische Lösungsmittel, wie z.B. Chloroform. Große Mengen dieser Mikroorganismen sind nur unter erheblich höherem Aufwand zu erhalten als aerobe Mikroorganismen, da sie langsamer wachsen und erheblich geringere Zellausbeuten bei hohem Verbrauch kohlenstoffhaltiger Stoffe liefern. Zur Anzucht solcher Kulturen müssen die Verweilzeiten entsprechend lang gewählt werden.

Le A 18 512 -EP

– 2 – .

Die Biomasse ist durch ihre Empfindlichkeit gegenüber Sauerstoff schlecht zu handhaben; es ist deshalb auch schwierig, aktive Zellen, Zellpräparate, Enzyme oder Enzympräparationen (nachfolgend "Präparationen" genannt), daraus herzustellen. Die Verwendung derartiger anaerober Bakterien, die sich nach Kontaktieren von Abwasser spontan als Rasen auf Trägermaterialien bilden, ist beispielsweise beschrieben in der deutschen Offenlegungsschrift 2 531 598.

Eine Aufgabe der vorliegenden Erfindung besteht darin, die Nachteile der bekannten reduktiven Verfahren, die mit dem Einsatz anaerober Mikroorganismen verbunden sind, möglichst zu vermeiden.

Die vorliegende Erfindung betrifft die Verwendung von Mikroorganismen mit Atmung oder daraus hergestellter Präparationen bei der Reduktion organischer Stoffe oder organisch/anorganischer Stoffgemische, insbesondere für die reduktive Behandlung von Abwasserinhaltstoffen, bei Abwesenheit von freiem molekularen Sauerstoff und in Gegenwart von Wasser und biologischen Elektronenlieferanten.

Die vorliegende Erfindung betrifft ferner ein Verfahren zur biochemischen Reduktion organischer Stoffe oder organisch-anorganischer Stoffgemische mittels Mikroorganismen bei Abwesenheit von freiem molekularen Sauerstoff, das dadurch gekennzeichnet ist, daß man die Reduktion in Gegenwart von Mikroorganismen mit Atmung oder daraus hergestellten Präparationen und eines oder mehrerer biologischer Elektronenlieferanten in Gegenwart von Wasser

Le A 18 512

bei pH-Werten zwischen etwa 3 und 11, vorzugsweise zwischen etwa 4 bis 8 und Verweilzeiten zwischen 0,5 und 50 Stunden, vorzugsweise 2 bis 20 Stunden, und Temperaturen zwischen etwa 10 und $80^{o}C$, vorzugsweise zwischen etwa 20 bis $40^{o}C$, durchführt.

Die vorliegende Erfindung betrifft ferner zur Reduktion organischer Stoffe oder organisch/anorganischer Stoffgemische geeignete Mischungen, enthaltend Mikroorganismen mit Atmung, ggf. in konservierter Form oder daraus hergestellte Präparationen, biologische Elektronenlieferanten, und ggf. übliche inerte Trägermaterialien und/oder Wasser.

Erfindungsgemäß werden die Mikroorganismen in Mengen zwischen 0,01 Gramm und 50 Gramm, vorzugsweise 0,1 Gramm und 20 Gramm, als Trockensubstanz gerechnet, pro Liter Reaktionsvolumen, eingesetzt. Präparationen werden in Mengen zwischen 0,001 bis 1000 Gramm, vorzugsweise 0,01 bis 100 Gramm, als Trockengewicht gerechnet, pro Liter Reaktionsvolumen eingesetzt.

Unter Mikroorganismen mit Atmung im Sinne der vorliegenden Erfindung werden nach H.G. Schlegel, Allgemeine Mikrobiologie, von G. Thieme-Verlag, Stuttgart, 2. Auflage, Seite 221, 258 Organismen verstanden, deren Wachstum in Gegenwart von Sauerstoff, vorzugsweise Luftsauerstoff, erfolgt; die für das Wachstum erforderlichen Sauerstoffäquivalente können auch über Wasserstoffperoxyd, Nitrat, Sulfat u.a. oder Mischungen dieser Sauerstofflieferanten erfolgen; somit fallen auch Mikroorganismen mit

0004304

- 4 -

anaerober Atmung unter diesen Begriff. Bevorzugt im Sinne der vorliegenden Erfindung werden solche oxydativ wachsenden Mikroorganismen eingesetzt, die in Gegenwart von gasförmigem, freiem molekularem Sauerstoff, wie z.B. Luft, gezüchtet wurden. Beispiele für derartige oxydative atmende Mikroorganismen sind: Protozoen, Algen, Blaualgen, Hefen, Pilze und/oder Bakterien. Besonders bevorzugt sind Pilze und Bakterien.

Zu den Pilzen gehören: Mycomyceten, Acrasiales, Phycomyceten, Ascomyceten und Hefen, Basidiomyceten sowie Deuteromyceten.

Beispiele für erfindungsgemäß einsetzbare Bakterien sind: Kriechende Bakterien der Ordnungen Mycobaceriales und Cytophagales, Achromatiaceen: Scheidenbakterien wie Sphaerotilus oder Leptothrix; Spiralige oder gebogene Bakterien wie Spirillacen; Gram negative aerobe Stäbchen und Kokken wie Pseudomonadaceae, Azobacteriaceen, Rhizobiaceen, Methylomonadaccen, Halobacteriaceen, Alcaligenes und Acetobecter, Enterobacteriaceen, Vibrionaceen, Chromobacetericum, Flavobacterium; Bakterien mit anaerober Atmung wie Desulfovibrio; Gram negative Kokken wie Neisseriacen, Acinetobacter; Gram negative chemolitotrophe Bakterien wie Nitrobacetiaceen, Thiobacillus; Gram-positove Kokken wie Mikrococcaceen; Sporenbildner wie Bacillaceen; Actinomyceten und ähnliche Bakterien wie coryneforme Bacterien, z.B. Arthrobacter, Brevibacterium, Cellulomonas, Corynebacterium, Actinomycetaceen, Mycobacteriaceen, Actinoplanaceen, Nocardiaceen, Streptomycetaceen, Micromonasporaceen.

Le A 18 512

Biologische Elektronenlieferanten im Sinne der vorliegenden Erfindung sind zunächst alle von aerob oder anaerob lebenden Mikroorganismen verwertbaren organischen Stoffe, wie organische Säuren, beispielsweise Essigsäure, Milchsäure, Propionsäure, Citronensäure, Gluconsäure, Ameisensäure, Glyoxylsäure, Oxalsäure, Zucker, wie z.B. Glucose, Maltose, Saccharose, Fructose, Xylose, Ribose, Stärke, Zellulose, Eiweiss, Eiweisshydrolysate, Aminosäuren, wie z.B. Alanin, Glutaminsäure, Asparaginsäure, Lysin, Alkohole, wie z.B. Methanol, Aethanol, Ketone, wie z.B. Aceton, Aldehyde, z.B. Acetaldehyd, Aromaten, wie z.B. Toluole, Phenole, Benzole, Xylol, Kresole, Benzoate, Salicylate, organische Lösungsmittel, wie z.B. Isopropanol, Aceton, Xylol, oder beliebige Gemische, wie kommunale Abwässer, Industrie-Abwässer, Molkerei-Abwässer, Schlachterei-Abwässer, Zuckerfabrik-Abwässer, Brauerei-Abwässer, Melasse, Hefeautolysate, Sulfitablauge, Fleischextrakte, Abwässer der Lebensmittel-Industrie, Zellhydrolysate von Hefen, Bakterien, Pilzen oder andere Zellaufschlüsse.

Biologische Elektronenlieferanten im Sinne der vorliegenden Erfindung können ferner auch anorganische Stoffe, wie z.B. Sulfid-, Thiosulfat-, Nitrit-, Mangan(II)-, Eisen(II)-, Ammoniumionen oder Schwefel oder Gase wie Methan oder Wasserstoff sein, die in diesem Fall für die Mikroorganismen als Energiequellen zum Zellaufbau dienen. Sowohl die organischen als auch die anorganischen biologischen Elektronenlieferanten können in gelöster Form oder als Suspension zum Einsatz gelangen; die zuvor genannten Abwässer sind Beispiele hierfür; vorzugsweise werden gelöste biologische Elektronenlieferanten eingesetzt. Es können auch Gemische anorganischer und organischer biologischer Elektronenlieferanten eingesetzt werden; bevorzugt sind organische biologische Elektronenlieferanten.

Le A 18 512

Das Gewichtsverhältnis der Summe der biologischen Elektronenlieferanten zu den Mikroorganismen mit Atmung, als Trockensubstanz gerechnet, soll zwischen etwa 0,01:1 bis 1000:1 , vorzugsweise 0,1:1 bis 100:1 betragen, wobei die Mikroorganismen, bezogen auf das Reaktionsvolumen, in Mengen zwischen 0,01 bis 50 Gramm, vorzugsweise 0,1 bis 20 Gramm, als Trockensubstanz berechnet, zugesetzt werden. Das Gewichtsverhältnis der Summe der biologischen Elektronenlieferanten zu Präparationen, als Trockensubstanz gerechnet, soll zwischen etwa 0,01:1 bis 1000:1, vorzugsweise 0,01:1 bis 100:1 betragen, wobei die Präparation, bezogen auf das Reaktionsvolumen, in Mengen zwischen 0,001 bis 1000 Gramm, vorzugsweise 0,01 bis 100 Gramm, als Trockensubstanz berechnet, zugesetzt wird.

Unter Reaktionsvolumen im Sinne der vorliegenden Erfindung wird das Gesamtvolumen der an der Reaktion beteiligten flüssigen und festen Stoffe verstanden.

Das erfindungsgemäße Verfahren wird vorzugsweise im wäßrigen System (z.B. Suspension, Emulsion) oder in wäßriger Lösung, falls lösliche Präparationen eingesetzt werden, durchgeführt.

Das erfindungsgemäße Verfahren kann mit oder ohne bekannte Trägermaterialien für die Mikroorganismen oder Präparationen durchgeführt werden. Vorzugsweise wird es in Abwesenheit von Trägermaterialien durchgeführt. Bekannte Trägermaterialien für Mikroorganismen sind zum Beispiel: Ionenaustauscher, Zellulose, Glas, Aktivkohle, Bimsstein, Schlacke, aktives Aluminiumoxyd. Hierbei erfolgt eine Fixierung der Biomasse über Absorption an der festen Oberfläche der Trägermaterialien. Als Trägermaterialien können in bekannter Weise auch Kunstharze, z.B. auf

- 7 -

Polyacrylamid-Basis, verwendet werden; hierbei erfolgt eine Einbettung der Mikroorganismen in die Poren des polymeren Netzwerkes.

Als Fixierungsmethoden an Trägermaterialien für Präparationen bieten sich neben den bereits im Zusammenhang für die Fixierung der Mikroorganismen an Trägermaterialien beschriebenen Möglichkeiten zusätzlich an die Methoden der Vernetzung mit bifunktionellen Reagenzien, wie z.B. mit Glutaraldehyd sowie die kovalente Bindung an Polymere, wie z.B. an Zellulose nach R. Axen et al Nature, 214, S.1302 (1976). Erfindungsgemäß werden vorzugsweise solche Mikroorganismen mit Atmung eingesetzt, die in ausreichender Menge einfach verfügbar oder anzüchtbar sind. In der Nähe z.B. von Kläranlagen, die nach dem bekannten Belebtschlammverfahren arbeiten, benutzt man vorzugsweise die Mikroorganismen des Überschußschlamms. Die Mikroorganismen können aber auch unabhängig vom Einsatzort hergestellt werden und beispielsweise in Form konservierter lebender und/oder toter Mikroorganismen oder daraus hergestellter Präparationen, ggf. in Kombination mit bekannten Trägern und/oder biologischen Elektronenlieferanten, eingesetzt werden.

Mikroorganismen mit Atmung werden in bekannter Weise als Mischpopulation oder als Reinkultur unter Belüftung mit üblichen Substraten gewonnen, wie z.B. beschrieben in "Methods in Microbiology",Vol. 1, Seiten 255 - 324, Academic Press, London and New York, 1969. Bevorzugt werden bei der Züchtung solche Substrate verwendet, die identisch sind mit den später erfindungsgemäß eingesetzten biologischen Elektronenlieferanten.

Le A 18 512

Die Anzucht der Mikroorganismen erfolgt nach üblichen
bekannten Methoden (loc. cit., Seiten 255 - 324), z.B.
in Fermentern, in durchmischten Kesseln, Becken oder
Säulen unter Belüftung in Gegenwart von organischen oder
anorganischen Kohlenstoff- und Energiequellen bei geeigneten Temperaturen und pH-Bereichen. Falls notwendig,
werden noch andere Zusätze, wie z.B. Stickstoff- und
Phosphorverbindungen, sowie Mineralsalze in den üblichen
bekannten Konzentrationen eingesetzt. Die bei der Anzucht
gebildete Biomasse wird mit üblichen Methoden (Methods
in Microbiology, Vol. 2, Seite 377 - 398, Academic Press
London and New York, 1970), z.B. durch Absetzen,
Zentrifugieren oder Filtrieren gewonnen. Als aktives,
lebendes Material ist es entweder sofort oder als
lebendes konserviertes Material je nach Bedarf unabhängig
vom Herstellungsort zur reduktiven Behandlung chemischer
Stoffe einsetzbar. Als Konservierungsmethoden für die
lebende, aktive Biomasse eignen sich z.B. die bekannte
Tiefkühllagerung bei etwa -18°C oder die bekannte
schonende Trocknung der Zellen, z.B. durch Lyophilisation.

Weiter lassen sich aus der Biomasse aktive Präparationen
(von Zellbruchstücken bis zu gereinigen Enzymen) in
bekannter Weise, wie z.B. beschrieben in "Methods in
Microbiology" Vol. 5B, Academic Press. London and New York
(1971)
herstellen, die entweder direkt, oder wie bereits beschrieben, an Trägermaterialien gebunden, eingesetzt
werden können. Solche bekannten Herstellungsmethoden
für Präparationen sind z.B. der Aufschluß von Mikroorganismen mit Ultraschall, Reiben auf festem Material,
Behandlung mit organischen Lösungsmitteln, Einfrieren
und Auftauen oder osmotischer Schock; die Präparationen
können nach üblichen Methoden, wie Gefriertrocknung,
konserviert werden. Erfindungsgemäß eingesetzt werden sie
z.B. in gelöster, frei schwimmender oder an Träger gebundener Form.

Le A 18 512

- 9 -

Mischungen, die für die Reduktion organischer Stoffe oder organisch/anorganischer Stoffgemische besonders geeignet sind, enthalten Mikroorganismen mit Atmung oder daraus hergestellte Präparationen, biologische Elektronenlieferanten und ggf. übliche inerte Trägermaterialien und/oder Wasser. Beispiele für solche Mischungen sind getrockneter, konservierter Belebtschlamm, der biologische Elektronenlieferanten, beispielsweise Stärke, in Mengen von etwa 1 bis 90 Gew.-%, bezogen auf Gesamtgewicht, enthält. Eine solche Mischung kann vorzugsweise durch Sprühtrocknung von Rückführschlamm aus einer Abwasseranlage, die nach dem Belebtschlammverfahren arbeitet, hergestellt werden, wobei dem Schlamm vor, während oder nach der Trocknung biologische Elektronenlieferanten zugesetzt werden können. Auch wasserhaltiger (etwa bis 99,7 Gewichtsprozent $H_2O$) Belebtschlamm, der z.B. Elektronenlieferanten wie Äthanol, Methanol, Glycerin oder Aceton in gelöster Form enthält, stellt ebenso wie lebende Fermentationsrückstände aus der Citronensäurefermentation oder Penicillin-Fermentation, die zuvor mit biologischen Elektronenlieferanten vermischt wurden, ein geeignetes Reduktionsmittel für chemische Stoffe dar.

Sowohl der pH-Wert als auch die Temperatur des erfindungsgemäßen Verfahrens richten sich nach den biologischen Bedürfnissen der Hauptbestandteile der eingesetzten Biomasse. Werden Hefen oder andere Pilze verwendet, so arbeitet man vorzugsweise in einem pH-Bereich von etwa 3 bis 10, besonders bevorzugt zwischen 4 bis 8.

Bei Verwendung von anderen Mikroorganismen mit Atmung wird erfindungsgemäß bei pH-Werten von etwa 3 bis 11,

Le A 18 512

vorzugsweise zwischen etwa 6 bis 8, gearbeitet.

Die Temperaturen für das erfindungsgemäße Verfahren liegen zwischen etwa 10 und 80°C. Bei Verwendung von thermophilen Organismen wird ein Temperaturbereich zwischen 30 und 80°C, vorzugsweise zwischen 45 und 60°C benutzt. Bei der Verwendung von mesophilen Organismen werden Temperaturen zwischen 10 und 45°C, vorzugsweise zwischen 20 und 37°C, bei Verwendung von psychophilen Organismen Temperaturen zwischen 10 und 20°C benutzt.

Das erfindungsgemäße Verfahren wird in Abwesenheit von freiem molekularen Sauerstoff durchgeführt. Wird in einer Ausführungsform die Reduktion im wäßrigen System, beispielsweise in Suspension oder Lösung, durchgeführt, so sind bei Verwendung von lebenden Mikroorganismen in Verbindung mit biologischen Elektronenlieferanten besondere Maßnahmen zur Eliminierung des im Abwasser gelösten Sauerstoffs in der Regel nicht erforderlich, da die Mikroorganismen durch ihre respiratorische Aktivität selbst für reduktive Bedingungen sorgen. Bei Verwendung von Zellpräparationen ist ein vorheriges Austreiben des Sauerstoffs, z.B. mit Stickstoff, oder die Verwendung von Agenzien zur Erniedrigung des Redox-Potentials auf Werte zwischen 0 und -500 mV,(mit einer Messkette, z.B. bestehend aus einer Platin- und einer Bezugselektrode, gemessen),wie z.B. Sulphit, Thioglykolat, Thiosulphat oder Cystein,vorteilhaft.

Nach der vorliegenden Erfindung lassen sich besonders vorteilhaft organisch oder organisch/anorganisch belastete

- 11 -

Abwässer, insbesondere Farbstoff-belastete Abwässer behandeln, die aerob nicht, bzw. langsam abbaubare organische und/oder anorganische Verbindungen enthalten. In einer bevorzugten Ausführungsform schließt sich dabei der erfindungsgemäßen Behandlung organisch belasteter Abwässer eine bekannte, aerobe Behandlung nach dem sog. Belebtschlammverfahren an.

Es ist erfindungsgemäß jedoch auch möglich, organische Verbindungen selektiv zu reduzieren, beispielsweise Carbonsäuren zu Alkoholen, sekundäre Alkohole zu Ketonen.

Nachfolgend wird das erfindungsgemäße Verfahren in Zusammenhang mit seiner vorteilhaften Anwendung bei der Abwässerbehandlung näher beschrieben.

Abwässer, die erfindungsgemäß behandelt werden, können z.B. Aliphaten, Aromaten, sulfonierte, nitrierte oder halogenierte organische Verbindungen, sowie Verbindungen mit Amino- und Sulfit-Funktionen enthalten; es können ferner z.B. Farbstoffe und Weißtöner, sowie die zu ihrer Herstellung dienenden Ausgangsprodukte, auch in beliebiger Kombination, zugegen sein, wobei die Farbstoffe reduktiv entfernt werden können. Besonders geeignet ist das erfindungsgemäße Verfahren für die Behandlung von Mono-, Dis-, Tris-, Polyazo-, Stilben-, Triarylmethan-, Methin-, Oxazin-, Anthrachinon- und/oder Thiazin-Farbstoffen. Die Anwesenheit üblicher anorganische Abwasserinhaltstoffe, wie z.B. Sulfat, Chlorid, Nitrat, beeinträchtigt das erfindungsgemäße Verfahren nicht; anorganische Bestandteile wie Nitrat, Sulfat, Peroxyd, werden hierbei in Abhängigkeit

Le A 18 512

von der Menge der dem System zugesetzten oder im System bereits vorhandenen Menge an biologischen Elektronenlieferanten teilweise bis vollständig reduziert.

Das erfindungsgemäße Reduktionsverfahren läßt sich in Abhängigkeit von der reduktiven Aktivität der verwendeten Mikroorganismen mit Atmung oder der daraus hergestellten Präparationen und in Abhängigkeit von den zu reduzierenden Stoffen, der Reaktionszeit, Temperatur usw. optimieren. Dabei ist zu berücksichtigen, daß die Reduktion in der Regel umso schneller verläuft, je größer die Menge an Mikroorganismen oder Präparationen ist; auf jeden Fall sollte die Menge der dem System zugesetzten bzw. im System vorhandenen biologischen Elektronenlieferanten mindestens so groß sein, daß sie für die vollständige Reduktion der Stoffe, die reduziert werden sollen, ausreicht; eine übermäßige Dosierung andererseits bringt keine wesentlichen Verbesserungen mehr.

Ist die Konzentration der erfindungsgemäß zu reduzierenden Stoffe nicht bekannt, beispielsweise in einem Abwasser, wird bezogen auf 1 Gramm Trockengewicht des zu reduzierenden Abwassers etwa 0,05 bis 200 Gramm, vorzugsweise 0,5 bis 20 Gramm, besonders bevorzugt 1 bis 10 Gramm biologischer Elektronenlieferant, eingesetzt. Sollte ein erheblicher Anteil des Trockengewichts aus reduzierbaren anorganischen Verbindungen, wie z.B. Nitrat, bestehen, so ist bei der Bemessung der einzusetzenden Menge der biologischen Elektronenlieferanten die Menge an derartigen anorganischen Bestandteilen so zu berücksichtigen, daß noch ein Überschuß für die Reduktion der vorliegenden organischen

Le A 18 512

Bestandteile vorhanden ist.

Die erfindungsgemäße reduktive Behandlung von Abwässern erfolgt vorzugsweise in Kesseln, Tanks, Becken, Fermentern oder Säulen mit oder ohne Füllkörper ohne Sauerstoffzufuhr. In einer Ausführungsform des erfindungsgemäßen Abwasserbehandlungsverfahren geht man am besten so vor, daß man 0,01 bis 50 Gramm, vorzugsweise 0,1 bis 20 Gramm Mikroorganismen als Trockensubstanz berechnet, pro Liter Abwasser, zusammen mit biologischen Elektronendonatoren in Mengen zwischen etwa 1 und 100 Gramm pro Gramm im Abwasser zu reduzierender Verbindungen, einsetzt und diese Präparationen bei geringer Durchmischung zwischen 0,5 und 50 Stunden, vorzugsweise 2 bis 20 Stunden, auf das Abwasser einwirken lässt.

Eine Ausführungsform des erfindungsgemäßen Verfahrens ist eine diskontinuierliche Arbeitsweise. Dabei wird in einer möglichen Variante 0,5 bis 5 Stunden vor Beendigung des Reduktionsprozesses die Durchmischung unterbrochen, um die Biomasse durch Absetzen zu konzentrieren. Man zieht das Überstehende ab und leitet es am besten in eine anschließende aerobe biologische Reinigung nach dem bekannten Belebtschlammverfahren. Die verbleibende Biomasse wird z.B. zur Regenerierung über 0,1 bis 10 Stunden, vorzugsweise zwischen 0,25 und 4 Stunden belüftet, ggf. unter Zufuhr von aerob abbaubaren Substraten. Sie kann dann erneut zur reduktiven Behandlung von organisch belasteten Abwässern eingesetzt werden.

Die Regenerierung der Biomasse kann in anderen Ausführungsformen auch durch Zugabe von Sauerstoff und/oder

Le A 18 512

Wasserstoffperoxyd und/oder Nitrat und/oder Sulfat
anstelle der Belüftung erfolgen.

Die aerobe Regeneration kann zum Teil durch Zufügung
von weiteren Nahrungsstoffen, wie Kohlenstoffquellen,
Stickstoffquellen, Salzen mit und ohne Regulierung
des pH-Wertes vorgenommen werden. Bei dieser Regenerierung
kann die Biomasse zum Teil erheblich zunehmen.

Nach einer anderen Ausführungsform des erfindungsgemäßen
Verfahrens kann die Behandlung des Abwassers kontinuierlich durchgeführt werden. Man lässt dabei den Reaktionsraum kontinuierlich mit organisch belastetem Abwasser
durchströmen. Das abfließende Abwasser-Biomasse-Gemisch
wird dann z.B. in einer Belebungsstufe mit Verweilzeiten
zwischen 0,5 bis 50 Stunden, vorzugsweise 1 und 20
Stunden, belüftet. Diese Behandlung dient der Regenerierung
der Biomasse und dem weiteren Abbau der organischen
Substanzen. Danach konzentriert man die Biomasse durch
üblicherweise angewandte bekannte Methoden, z.B. durch
Absetzen, Zentrifugieren oder Filtrieren. Es wird soviel
Biomasse in den unter reduzierenden Bedingungen betriebenen Reaktionsraum zurückgeführt, daß deren
Konzentration zwischen etwa 0,01 und 50 Gramm, vorzugsweise zwischen 0,1 und 20 Gramm, besonders bevorzugt zwischen
0,5 und 10 Gramm, als Trockensubstanz gerechnet, pro Liter
Abwasser beträgt. Eine Variante dieser Ausführungsform
besteht in dem sofortigen Konzentrieren der Biomasse nach
dem Verlassen des reduktiv betriebenen Reaktionsraumes.
Die Biomasse kann dann getrennt vom Abwasser, z.B. durch
Begasung mit Luft und/oder Zugabe von Wasserstoffperoxyd
und/oder Nitrat und/oder Sulfat reaktiviert und in den reduktiv betriebenen Reaktionsraum zurückgeführt werden. Das resultierende Abwasser kann vorzugsweise aerob nach dem Belebtschlammverfahren weiterbehandelt werden. In Sonderfällen ist eine aerobe Schlammreaktivierung nicht erforderlich.

Sowohl bei der kontinuierlichen als auch bei der diskontinuierlichen Verfahrensweise besteht, wie bereits ausgeführt, die Möglichkeit, organisch belastetes Abwasser anstelle mit aktiver Biomasse auch mit Präparationen, die aus der Biomasse gewonnen werden, reduktiv zu behandeln.

Nachfolgend wird das erfindungsgemäße Verfahren beispielhaft erläutert:

Le A 18 512

Beispiel 1

Filtrat aus der thermischen Schlammbehandlung (Porteous-Verfahren) einer Großkläranlage für industrielle und kommunale Abwässer wurde mit 6 Teilen Leitungswasser verdünnt und nach der Verdünnung wurden 10 mg/l Phosphor in Form von ortho-Phosphat zugegeben.

Diese Lösung wurde für die reduktive biologische Entfärbung als Elektronenlieferant verwendet und hatte folgende Analysenwerte:

Elektronenlieferant:

$BSB_5$    =    747 mg/l

CSB     = 1785 mg/l

DOC     =    455 mg/l

Glühverlust     = 1515 mg/l

Als zu entfärbender Farbstoff wurde der anionische Reaktivfarbstoff Colour Index Reactive Red 40 (C.I. Reactive Red 40) verwendet, der zu dem vorgenannten Elektronenlieferanten in der Menge von 100 mg/l zugefügt wurde.

Analysendaten von C.I. Reactive Red 40:

$BSB_5$    =    0 mg/g

CSB     = 950 mg/g

DOC     = 338 mg/g

Bei der Dosis von 100 mg/l C.I. Reactive Red 40 war somit ein Verhältnis von Glühverlust des Elektronenlieferanten zu Farbstoff von ≈ 15 gegeben. (1515 : 100).

Le A 18 512

Die Mischung von Elektronenlieferanten und Farbstoff wies folgende Analysendaten auf:

$BSB_5$ = 747 mg/l

CSB = 1880 mg/l

DOC = 489 mg/l

Dieses so zusammengesetzte farbige Abwasser mit einer Extinktion von 2,46 (515 mm/ 1 cm Schichtdicke) wurde mit einer Fördermenge von 500 ml/h in einen gerührten Vierhalskolben mit seitlichem Abgangsstutzen und einem nutzbaren Volumen von 5 l eingespeist. Im folgenden wird dieser erste Reaktor als "Behälter für die reduktive Behandlung" bezeichnet. Der Überlauf dieses Behälters mündete in einem mit 50 l/h Luft über eine Fritte begasten Behälter ("Behälter für die aerobe Schlammreaktivierung"). Der Behälter für die aerobe Schlammreaktivierung wies einen seitlichen Überlauf auf und hatte einen Nutzinhalt von 2 l. Der Überlauf ging in einen Zwischenklärer.

Beim Anfahren des Versuches wurde das oben beschriebene System mit Rücklaufschlamm aus einer nach dem Belebtschlammverfahren arbeitenden Großkläranlage für industrielle und kommunale Abwasser befüllt.

Auf Grund der Verhältnisse der Behältervolumina zur Fördermenge ergaben sich folgende Verweilzeiten:

Reduktive Behandlung: 10 h

aerobe Schlammreaktivierung: 4 h

Zwischenklärer: 5 h

Die reduktive Behandlung führte zu einer vollständigen irreversiblen Entfärbung von Reaktive Red 40.

Le A 18 512

Im Behälter für die reduktive Behandlung wurde während des Versuches mittels einer Meßkette, bestehend aus einer Platin- und einer Bezugselektrode, ein Potential zwischen - 416 und - 461 mV gemessen. In den Behältern für die reduktive Behandlung und die aerobe Schlammreaktivierung lag die Schlammkonzentration bei 11,7 g/l Trockensubstanz. Im Behälter für die aerobe Schlammreaktivierung wurde ein Sauerstoffgehalt von 6,5 mg $O_2$/l gemessen. Am Boden des Zwischenklärers wurden mit einer Kolbenmembranpumpe 500 ml/h Schlamm abgezogen und in den Behälter für die reduktive Behandlung zurückgeführt (Rücklaufverhältnis 100 %). Nach dem Zwischenklärer wies das Abwasser folgende Analysenwerte auf:

$BSB_5$ = 253 mg/l
CSB = 1003 mg/l
DOC = 324 mg/l

Dem beschriebenen erfindungsgemäßen Verfahren war eine Labor - Belebtschlammanlage nachgeschaltet, bei der die Belüftungszeit 16 h und die Verweilzeit im Nachklärer 5 h betrug.
Der Ablauf des Nachklärers hatte folgende Analysendaten:

$BSB_5$ = 36 mg/l
CSB = 516 mg/l
DOC = 182 mg/l

Der pH-Wert des Abwassers änderte sich von 7,6 vor der reduktiven Behandlung auf 8,2 nach der aeroben Behandlung.

Le A 18 512

Beispiel 2

Es wurde eine wäßrige Farbstofflösung folgender Zusammensetzung reduktiv behandelt.

C.I. Acid Red 73, 51.2 mg/l; C.I. Acid Yellow 49, 42.6 mg/l;
C.I. Acid Red 42, 48.3 mg/l; C.I. Acid Red 118, 56.2 mg/l.

Ein Liter dieser Farbstofflösung wurde mit 0,3 g Äthanol
als Elektronenlieferant und 0,6 g mikrobieller Zellen
versetzt. Die vorherige Gewinnung der Zellen erfolgte durch
Anzucht in einer 0,2 %igen äthanolischen Mineralnährlösung unter Begasung mit Luft nach üblichen Methoden,
wie z.B. beschrieben in "Methods in Microbiology", Vol.1,
Seite 255-324, Academic Press, London and New York, 1969.
Der im Farbstoffwasser gelöste Sauerstoff wurde vor der
Zugabe des Elektronenlieferanten Äthanol durch Begasung
mit Stickstoff ausgetrieben. Die reduktive Behandlung
wurde dann bei 28°C unter Luftabschluß begonnen. Das
Ende der Behandlung zeigte sich nach 42 Std. durch das
Umschlagen der Farbe des Wassers von tiefrot nach blassgelb an.

Beispiel 3

Immobilisation mikrobieller Zellen durch Polyacrylamidgel

Die Einbettung der mikrobiellen Zellen in Polyacrylamidgel
wurde nach dem Verfahren von CHIBATA et al, (Chibata, I.,
Tosa, t., Sato, T., Methods in Enzymology, Vol. 44,
Immobilized Enzymes, Ed. K. Mosbach, (1976), 739) durchgeführt.

Le A 18 512

5 g bzw. 1 g lyophilisierte auf Methanol angezogene mikrobielle Zellen wurden in 20 ml physiologischer Kochsalzlösung suspendiert und im Eisbad auf 8°C abgekühlt. Eine aus 7,5 g Acrylamid und 0,4 g N,N'-Methylenbisacrylamid in 24 ml dest. Wasser hergestellte Monomerlösung wurde auf die gleiche Temperatur gebracht (8°C). Bei 8°C wurden die Zellsuspension, die Monomerlösung sowie 1 ml 25 % (v/v) ß-Dimethylaminopropionitril- und 5 ml 1 %ige Ammoniumpersulfatlösung zusammengegeben und bei Raumtemperatur stehengelassen. Nach etwa 10 Minuten startete die Polymerisationsreaktion. Die Temperatur wurde im Eisbad unter 30°C gehalten und nach ca. 20 Minuten war die Reaktion beendet. Das erhaltene Gel wurde mit 200 ml physiol. NaCl-Lösung durch Scherenwirkung 1 Minute zerkleinert und in eine (30 x 2,5 cm) Säule gefüllt (Füllhöhe 17 cm).

Entfärbung von C.I. Reactive Red 40

100 mg C.I. Reactive Red 40, 650 mg KCN (0,01 M) und 10 ml Methanol wurden mit dest. Wasser auf 1000 ml aufgefüllt.

Die Entfärbung verläuft auf der Säule kontinuierlich bei einer Durchflußgeschwindigkeit von 10 ml/h.

Beispiel 4

Immobilisation mikrobieller Zellen durch Glutaraldehyd

Le A 18 512

Das Verfahren mikrobielle Zellen zu immobilisieren, besteht darin, die gewonnenen Bakterienzellen in einem wäßrigen Medium zu suspendieren und mit Glutaraldehyd in einer Menge von 0,1 bis 50 Gew.-%, bezogen auf das Trockengewicht der Zellen zu vermischen (DOS 2 539 015). 0,5 g lyophilisierte auf Methanol angezogene mikrobielle Zellen wurden in 50 ml phys. NaCl-Lösung suspendiert und mit NaOH auf pH 8,2 eingestellt. Es wurden 3,5 ml 1 % Glutaraldehydlösung hinzugegeben (7 % Glutaraldehyd auf das Trockengewicht der Zellen bezogen) und 1,5 Stunden unter Konstanthalten des pH-Wertes auf 8,2 bei etwa 20$^{\circ}$C gerührt. Anschließend wurde der Rückstand nach Zentrifugation 10 mal mit je 50 ml physiol. NaCl-Lösung, pH 8,0, gewaschen. Die immobilisierten Zellen wurden in eine Säule gefüllt. Entfärbung wie in Beispiel 1.

- 22 -

Patentansprüche:

1. Verwendung von Mikroorganismen mit Atmung oder daraus hergestellter Präparationen bei der Reduktion organischer Stoffe oder organisch/anorganischer Stoffgemische, insbesondere für die reduktive Behandlung von Abwasserinhaltstoffen, bei Abwesenheit von freiem molekularem Sauerstoff in Gegenwart von Wasser und biologischen Elektronenlieferanten.

2. Verwendung gemäß Anspruch 1, dadurch gekennzeichnet, daß die Mikroorganismenmenge zwischen 0,01 Gramm und 50 Gramm, als Trockensubstanz gerechnet, pro Liter Reaktionsvolumen beträgt.

3. Verwendung gemäß einem der Ansprüche 1 bis 2, dadurch gekennzeichnet, daß die Menge der Präparation zwischen 0,001 bis 1000 Gramm, als Trockengewicht gerechnet, pro Liter Reaktionsvolumen, beträgt.

4. Verfahren zur biochemischen Reduktion organischer Stoffe oder organisch/anorganischer Stoffgemische mittels Mikroorganismen bei Abwesenheit von freiem molekularen Sauerstoff, dadurch gekennzeichnet, daß man die Reduktion in Gegenwart von Mikroorganismen mit Atmung oder daraus hergestellten Präparationen und eines oder mehrerer biologischer Elektronenlieferanten in Gegenwart von Wasser bei pH-Werten zwischen etwa 3 und 11, vorzugsweise zwischen etwa 4 bis 8 und Verweilzeiten zwischen 0,5 und 50 Stunden, vorzugsweise 2 bis 20 Stunden und Temperaturen zwischen etwa

Le A 18 512

10 und etwa 80°C, vorzugsweise zwischen etwa 20 bis 40°C durchführt.

5. Verfahren gemäß Anspruch 4, dadurch gekennzeichnet, daß das Gewichtsverhältnis der Summe der biologischen Elektronenlieferanten zu den Mikroorganismen mit Atmung, als Trockensubstanz gerechnet, zwischen etwa 0,01:1 bis 1000:1, vorzugsweise 0,1:1 bis 100:1 beträgt, wobei die Mikroorganismen, bezogen auf das Reaktionsvolumen, in Mengen zwischen 0,01 bis 50 Gramm, vorzugsweise 0,1 bis 20 Gramm, als Trockensubstanz gerechnet, zugesetzt werden.

6. Verfahren gemäß einem der Ansprüche 4 bis 5, dadurch gekennzeichnet, daß das Gewichtsverhältnis der Summe der biologischen Elektronenlieferanten zu den Präparationen, als Trockensubstanz gerechnet, zwischen etwa 0,01:1 bis 1000:1 , vorzugsweise 0,1:1 bis 100:1 beträgt, wobei die Präparationen, bezogen auf das Reaktionsvolumen, in Mengen zwischen 0,001 bis 1000 Gramm, vorzugsweise 0,01 bis 100 Gramm, als Trockensubstanz gerechnet, zugesetzt werden.

7. Verfahren gemäß einem der Ansprüche 4 bis 7, dadurch gekennzeichnet, daß als biologische Elektronenlieferanten von Mikroorganismen mit Atmung verwertbare anorganische und/oder organische Stoffe eingesetzt werden.

Le A 18 512

8. Verfahren gemäß einem der Ansprüche 4 bis 8, dadurch gekennzeichnet, daß das Gewichtsverhältnis von biologischem Elektronenlieferant zu zu reduzierender Substanz zwischen 0,1 : 1 bis 100 : 1, vorzugsweise zwischen 0,5: 1 bis 20 : 1 liegt.

9. Verfahren gemäß einem der Ansprüche 4 bis 9, dadurch gekennzeichnet, daß im Anschluß an die reduktive biochemische Behandlung ggf. nach Abtrennung der Mikroorganismen mit Atmung eine Behandlung nach dem Belebtschlammverfahren durchgeführt wird.

10. Zur Reduktion organischer Stoffe oder organisch/anorganischer Stoffgemische geeignete Mischungen, enthaltend Mikroorganismen mit Atmung, ggf. in konservierter Form oder daraus hergestellte Präparationen, biologische Elektronenlieferanten, und ggf. übliche inerte Trägermaterialien und/oder Wasser.

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 2 205 484 (D. MATTHEY DORET)<br><br>* Seite 12, Anspruch 1; Seite 2, Zeile 24 - Seite 3, Zeile 11 *<br><br>-- | 1,4,9, 10 |
| X | FR - A - 2 226 364 (S.O.F.R.E. P.U.R.)<br><br>* Seite 4, Zeile 7 - Seite 5, Zeile 5; Seite 7, Ansprüche 1-4,6,10 *<br><br>-- | 1,4,9, 10 |
| A | FR - A - 1 299 104 (L. HOLZINGER) | |
| A | US - A - 2 875 151 (A.B. DAVIDSON) | |
| A | DE - A - 2 235 977 (SAPEC-SETRIC) | |
| A | GB - A - 1 277 632 (ASAHI KASEI) | |
| A | US - A - 3 963 576 (F.L. HORSFALL et al.)<br><br>---- | |

**KLASSIFIKATION DER ANMELDUNG (Int.Cl.²)**

C 02 C 1/14
1/17

**RECHERCHIERTE SACHGEBIETE (Int. Cl.²)**

C 02 C 1/17
1/06

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 19-06-1979 | TEPLY |

EPA form 1503.1   06.78